# EUROPEAN PATENT SPECIFICATION

(11) **EP 0 978 434 B1**
(45) Date of publication and mention of the grant of the patent: **16.05.2001**
(21) Application number: 99104426.4
(22) Date of filing: 01.03.1999
(51) Int. Cl.: B60T 13/66

(54) **A braking system for trackbound vehicles, including an electronically controlled electropneumatic distributor**
Bremsanlage für schienengebundene Fahrzeuge, versehen mit einem elektronisch angesteuerten elektropneumatischen Verteilerventil
Système de freinage pour véhicules ferroviaires, munis d'un distributeur électropneumatique commandé électroniquement

(30) Priority: 05.08.1998 IT TO980682
(43) Date of publication of application: 09.02.2000
(73) Proprietor: SAB WABCO S.p.A., I-10045 Piossasco (Torino) (IT)
(72) Inventor: Barberis, Dario c/o Sab Wabco Spa, 10045 Piossasco (IT); Tione, Roberto c/o Sab Wabco Spa, 10045 Piossasco (IT)
(74) Representative: Marchitelli, Mauro

(56) References cited:
- EP-A- 0 652 146
- EP-A- 0 652 147
- EP-A- 0 855 321
- US-A- 5 501 512

## Description

The present innovation relates to a train comprising an air braking system, according to the preamble of claim 1.

The braking system most used at international level is based on the operating principle of the Westinghouse air brake. Schematically, this braking system comprises a main reservoir of compressed air placed on the locomotive and fed by a compressor. A brake pipe at a reference pressure of 5 bar starts from the main reservoir and extends along all the vehicles of the train. A brake control cock placed on the locomotive enables a reduction of pressure in the brake pipe with respect to the reference pressure and a plurality of braking apparatus placed on the various vehicles of the train produce a braking force correlated to the difference between the pressure in the brake pipe and the reference pressure.

In air braking system of this type, many special devices are used which are mass-produced and which must meet certain standard conditions in order to ensure the correct operation of the train brake even when vehicles of different origins are coupled to each other. One of the most important components of the braking system, at the level of each vehicle, is the pneumatic distributor which establishes or prevents a connection between the brake pipe and an auxiliary reservoir and which, during braking, connects the braking cylinders of each vehicle to the auxiliary reservoir. U.I.C. standards (Union Internationale de Chemin de Fer) have set the basic features of the distributors so that the vehicles on which they are installed can be pneumatically coupled to each other and have performances contained into sufficiently defined limits, so that they can be used in the same train. Modern distributors for air braking systems are completely pneumatic devices which, among other things, must ensure a propagation of the braking signal along the brake pipe at a minimum speed of 250 m/s. In addition, the distributor must be designed so that any interruption of the brake pipe will automatically produce an emergency braking of the train. Finally, the distributor ensures a complete modulation of the train both during braking and during the release of the brake. On the other hand, the braking system is rendered exhaustion-free with a suitable design of the auxiliary reservoir, so that in limit conditions the brakes are not released if the pressure in such reservoir falls below a certain limit.

EP-A-652 146 and EP-A- 652 147 disclose a pressure medium-operated brake device for rail vehicle formations with a main air line, by way of which both the pressure medium reservoirs for individual vehicles are filled and the pneumatic brake signals are transmitted, a control valve device being arranged on each individual vehicle, which in the event of a pressure drop in the main air line causes a delivery of pressure medium proportional to the size of the pressure drop, from the reservoir to the brake cylinder. Each control valve device has a proportional control valve function and in addition electronic and/or electro-mechanical means, by means of which the pressure drop in the main air line can be measured, and an electrical actuating signal can be generated for the delivery of pressure medium to the brake cylinder (3).

The object of the present invention is to provide a train with an improved braking system which is perfectly compatible with traditional distributors produced in conformity to U.I.C. standards and having improved safety capabilities.

According to the present invention, this object is achieved by a train having the features forming the subject of the main claim.

One of the main aspects of the train according to the invention consists essentially in that the distributor is formed by an electro-pneumatic, electronically controlled device, including at least one pressure transducer and at least one group of electrically controlled braking valves controlled by an electronic control unit programmed for emulating the operating conditions of a completely pneumatic distributor which operates in conformity to U.I.C. standards.

The electronically controlled distributor according to the invention can be easily designed for carrying out an anti-skid function of either the bogie or the axle of the vehicle and is provided with a purely pneumatic emergency section which can guarantee the maximum braking action even in case of failure of either the electronic control or of the electro-pneumatic devices. In a preferred embodiment of the invention, the braking system enables the braking pressure to be varied as a function of the weight acting on each bogie of the vehicle, on the basis of electric or pneumatic signals coming from suitable weighting devices.

The electronic control unit of the distributor according to the invention can be arranged for receiving control signals via radio e/o for transmitting operative answers or diagnostic information on the operating state of the braking system.

Further characteristics and advantages of the present invention will become clear in the course of the detailed description which follows, given purely by way of non-limiting example, with reference to the attached drawings, in which:
- figure 1 is a diagram showing a train provided with an air braking system,
- figure 2 is a diagram showing the main components of the braking system according to the present invention, on each vehicle of the train,
- figure 3 is a diagram of the pneumatic circuit of an electronically controlled distributor according to the invention, and
- figure 4 is a simplified electric diagram of the distributor according to the invention.

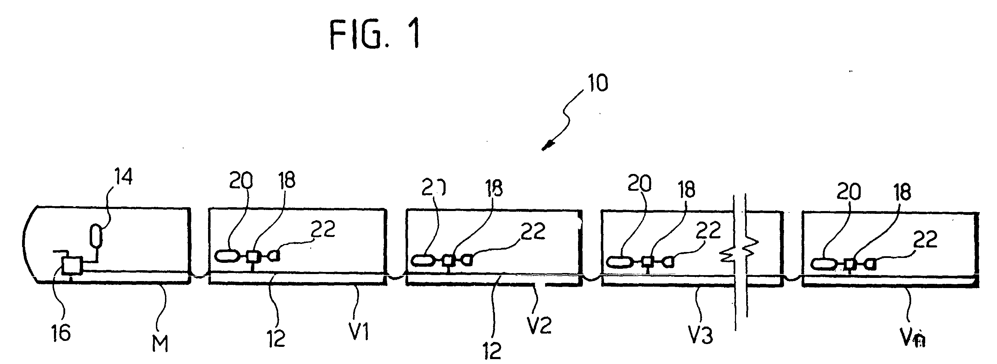

With reference to figure 1, the reference numeral 10 indicated a train formed by a locomotive M and by a plurality of vehicles coupled to each other, indicated V₁, V₂, V₃, ...Vₙ. In a way per se known, the train 10 is provided with an air braking system including a brake pipe 12 which extends from the locomotive to the last vehicle of the train. The braking system comprises essentially a main reservoir 14 (dedicated to the braking system) placed on the locomotive M and connected to the brake pipe 12 by means of a control cock 16.

A braking assembly including, in a way known per se, a distributor 18 pneumatically connected to the brake pipe 12, to an auxiliary reservoir 20 and to one or more braking cylinders 22 mechanically connected to the brake control linkage, is arranged on each vehicle V₁, V₂, V₃, ... Vₙ.

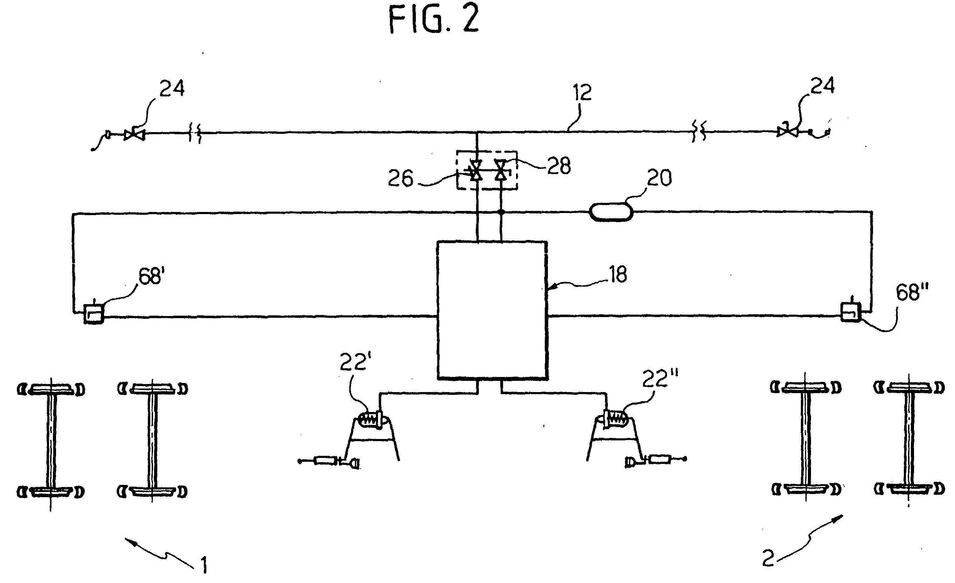

Figure 2 schematically shows the braking system according to the present invention of a generic vehicle of the train. Each vehicle has a portion of the brake pipe 12 provided with manually operated end valves 24. Figure 2 shows by way of example a vehicle having two bogie indicated at 1 and 2, each of which has two axles. The brakes of the two bogies 1 and 2 are controlled by respective braking cylinders 22' and 22". In the example shown in the figure, both braking cylinders 22', 22" are controlled by one and the same distributor 18. As an alternative, two separate distributors could be provided. The distributor 18 is directly connected to the brake pipe 12 by means of an on-off valve 26 and is also connected to an exhaust valve 28.

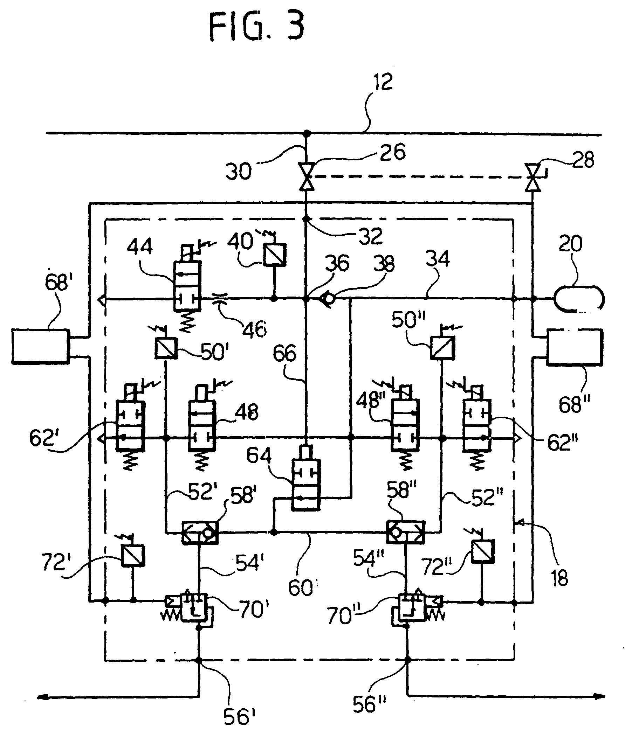

Figure 3 shows the pneumatic diagram of the distributor 18, whose outer housing is schematically indicated by the dotted line 18. In the diagram of figure 3 the numeral reference 30 indicates the pneumatic line which connects the distributor 18 to the brake pipe 12 through the on-off valve 26. The line 30 enters into the distributor 18 by means of an inlet fitting schematically represented by the point 22. The auxiliary reservoir 20 is connected to the distributor 18 by means of a line 34 connected to the line 30 at the point indicated at 36. A check valve 38 is arranged on the line 34.

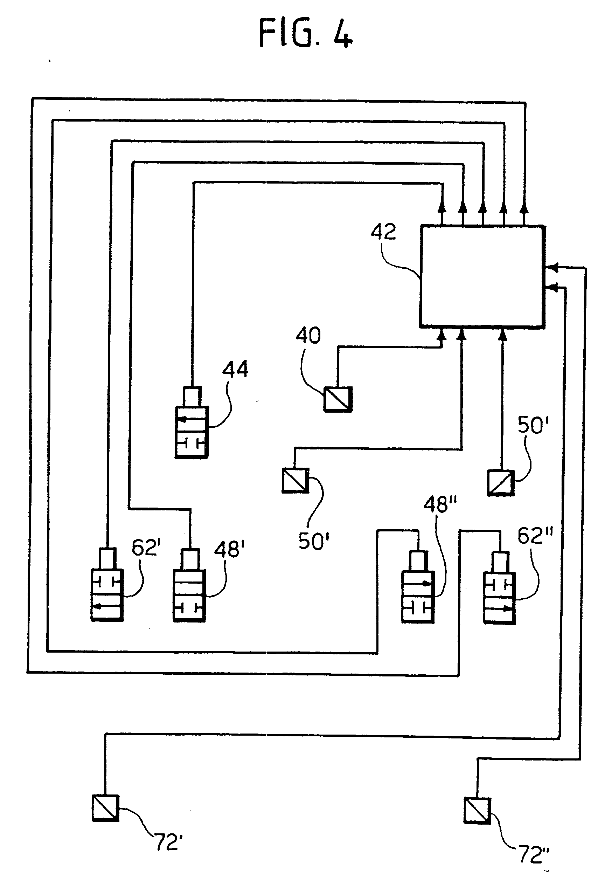

The distributor 18 comprises a pressure transducer 40 arranged for detecting the pressure on the inlet line 30, which is coincident with the value of the pressure in the portion of the brake pipe 12 adjacent to the distributor 18. The transducer 40 generates electrical signals indicating the value of the pressure and sends these signals to an electronic control unit indicated at 42 in figure 4.

When the electronic control unit 42 receives from the transducer 40 a signal indicating a drop of pressure in the brake pipe 12, it opens an accelerating valve 44 which is connected to the inlet line 32 by a throttling 46. The accelerating valve 44 is intended to put the line 32 in communication with the atmosphere for a predetermined time, in order to accelerate the propagation of the depression along the brake pipe 12. The exhaust to the atmosphere is controlled by the throttling 46 and concerns only the line 32 and the brake pipe 12 because the auxiliary reservoir 20 is insulated by the line connected to the atmosphere by the check valve 38. The electronic control unit 42 closes the accelerating valve 42 after a predetermined time interval, so as to simulate the time necessary for filling the accelerating chamber of a U.I.C. pneumatic distributor.

An application valve (not shown) can be arranged in parallel to the accelerating valve 44 for connecting directly to the atmosphere the brake pipe without any throttling and without time limitations, for producing an emergency braking.

The distributor 18 comprises two braking valve assemblies, each of which comprises two electrically controlled braking valves 48', 48" which are directly connected to the auxiliary reservoir 20. The valves 48', 48" are normally closed and are opened by the electronic control unit 42 when the latter receives the signals indicating the drop of pressure in the brake pipe 12 from the transducer 40. Respective electrically controlled brake-release valves 62', 62" are arranged downstream of the braking valves 48', 48". These valves are -normally open and are brought in a closed position when the control unit 42 detects a drop of pressure in the brake pipe. Two pressure transducer 50', 50" detect the pressure downstream of the braking valves 48', 48" and send feedback signals to the control unit 42 on the basis of which the control unit 42 acts on the braking valves 48', 48" and on the brake-release valves 62', 62" so as to have on the lines 52', 52" a value of pressure which is precisely correlated to the difference between the pressure in the brake pipe 12 (detected by the transducer 40) and the reference pressure of the braking system (equal to the pressure in the brake pipe 12 when there is no braking action). On the lines 52', 52", downstream of the brake valves 48' and 48", there is therefore a braking pressure with modulated amplitude which is sent to the braking cylinders 22', 22" through respective lines 54', 54" which come out of the distributor 18 through fittings schematically represented by points 56' and 56". Respective double stop valves 58', 58" are placed on the intersection between the lines 52', 54' and 52", 54" and are connected to each other by a line 60, whose function will become clear in the following of the description.

The operation of the device previously disclosed is the following.

The braking of the train is controlled by operating the control cock 16 as usual in air braking systems. The operation of the control cock 16 produces a drop of pressure in the brake pipe 12 which propagates from the head to the tail of the train. When the drop of pressure reaches the distributor 18 of a vehicle, it is detected by the pressure transducer 40 which sends to the control unit 42 a signal indicating the value of the pressure. The control unit 42 opens the accelerating valve 44 in order to accelerate the propagation of the depression along the brake pipe 12. At the same time, the control unit 42 determines the value of the braking pressure to be applied to the braking cylinders 22', 22" on the basis of the difference between the pressure in the brake pipe 12 and the normal reference pressure. The control unit 42 operates at the same time the brake valves 48' and 48" and the brake-release valves 62', 62". The brake release valves 62', 62" are closed whereas the brake valves 48', 48" are open. In this condition, the compressed air contained in the auxiliary reservoir 20 passes through the brake valves 48', 48" and reaches the brake cylinders 22', 22" through the lines 52', 54' and 52", 54". The pressure transducers 50', 50" detect the value of the brake pressure and send a signal to the control unit 42 which enables a variation of the opening time of the valves 48', 48" and 62', 62", so as to obtain the desired value of the brake pressure.

The control unit 42 can be programmed so as to obtain a behaviour of the distributor 18 which precisely emulates the behaviour of a completely pneumatic distributor which operates in conformity to U.I.C. standards. The electronically controlled distributor according to the invention is therefore perfectly compatible with standard pneumatic distributors and vehicles equipped with the distributor according to the invention can be used in a train together with vehicles provided with traditional pneumatic distributors.

The source of electric power necessary for the operation of the distributor 18 can be a battery which, together with the respective charger, can be incorporated in the device.

The distributor 18 can be easily designed for carrying out also a wheel anti-skid function. In fact, the control unit 42 can be programmed for reducing the brake pressure when it receives a signal indicating that the wheels are close to locking conditions.

In the preferred embodiment of the invention, the control unit 42 is a microprocessor. A hardwired circuit can be provided as a redundancy for controlling the brakes in case of failure of the microprocessor unit.

The control unit 42 can be connected to a radio transmitter-receiver adapted to receive control signals and to send operating answers and information on the operating state of the braking system.

In the embodiment shown in figure 1, the distributor 18 is formed by a single component which controls the breaking of two bogies of a single vehicle. As an alternative, the distributor 18 can be formed by two or more sub-assemblies placed in correspondence with respective bogies. Each subassembly would be provided with a single brake valve 48 and with a single brake-release valve 62 whereas the remaining part of the pneumatic circuit would remain the same as the diagram of figure 3. The two or more sub-assemblies could be installed directly on the bogies and could be connected to each other by a serial bus thereby permitting, in case of failure of a subassembly, the operative intervention of the other or others sub-assemblies of the same vehicle.

The distributor 18 according to the present invention detects the passage of the depression which propagates along the brake pipe 12 by means of the pressure transducer 40. Consequently, such distributor can carry out automatically the determination of the composition of a train, as disclosed in detail in the Italian patent application No. TO98A000560 of the same Applicant.

The distributor 18 according to the present invention can be designed for carrying out different optional functions in addition to the main functions consisting in braking, releasing the brakes and accelerating the propagation of the depression in the brake pipe. With reference to figure 3, the distributor 18 is provided with a pneumatically controlled safety valve 64 adapted to ensure the maximum braking action even in case of failure of either the electronic control system or of the electro-pneumatic devices. The safety valve 64 is connected to the inlet line by a line 66 and is calibrated for remaining in a closed position until the pressure in the line 66 (corresponding to the pressure in the brake pipe 12) remains higher than an intervention threshold (for instance of 3.3 bar). When the pressure in the brake pipes falls below the intervention threshold of the safety valve 64, this valve opens under the action of elastic means. In the open position, the safety valve 64 puts the auxiliary reservoir 20 in communication with the line 60. The stop valves close the communication between the line 60 and the lines 52', 52" and the auxiliary reservoir 20 is connected to the lines 54', 54" which feed the brake pressure to the brake cylinders 22', 22".

An optional function of the distributor 18 consists in the variation of the brake pressure as a function of the weight acting on each bogie. This function can be obtained by arranging respective weighting devices 68', 68" (figures 2 and 3) in correspondence with the bogies 1, 2, the weighting devices being formed for instance by pneumatic devices per se known, adapted to provide a pneumatic signal indicative of the load acting thereon. The pneumatic signals produced by the weighting devices 68', 68" can be used for driving respective relay valves (figure 3) which reduce the brake pressure proportionally to the reduction of load on each bogie with respect to the condition of maximum load. In practice, when the load acting on the bogie is equal to or higher than the maximum value, the relay valves 70', 70" do not reduce the brake pressure on the lines 54', 54". On the contrary, if the load on the bogies 1, 2 is lower than the maximum value, the brake pressure is proportionally reduced by a partial opening of the relay valves 70', 70".

A pair of transducers 72', 72" can be arranged on the pneumatic lines driving the relay valves 70', 70" for providing information on the load conditions of the bogies to the control unit.

## Claims

1. A train formed by a plurality of vehicles (M, V₁, V₂, V₃, ...Vₙ) coupled to each other, comprising a braking system comprising:
- at least one compressed air main reservoir (14) placed on a locomotive (M) of the train,
- a brake pipe (12) which extends along all the vehicles of the train,
- a brake control cock (16) adapted to produce a reduction of pressure in the brake pipe (12) with respect to a reference pressure,
- a plurality of brake cylinders (22', 22") arranged on the trackbound vehicles,
- at least one auxiliary reservoir (20) on each vehicle of the train, and
- at least one distributor for controlling the brakes (18), arranged on each vehicle and connected to the brake pipe (12), to the auxiliary reservoir (20) and to at least one brake cylinder (22', 22"), the distributor (18) being adapted to send to at least one respective brake cylinder (22', 22") a brake pressure correlated to the difference between the pressure in the brake pipe (12) and said reference pressure,
said distributor (18) comprising an electronically controlled electro-pneumatic device, including at least one pressure transducer (40) for generating an electric signal indicative of the pressure in the brake pipe (12), at least one electrically controlled brake valve assembly (48', 48", 50', 50", 62', 62") and an electronic control unit (42) adapted to control said brake valve assembly (48', 48", 50', 50", 62', 62") as a function of the signals coming from said pressure transducer (40),
characterized in that said distributor (18) comprises a pneumatically controlled safety valve (64) adapted to put the auxiliary reservoir (20) in communication with at least one brake cylinder (22', 22") when the pressure in the brake pipe (12) falls below a safety intervention threshold.

2. A train according to claim 1, characterized in that said valve assembly comprises at least one second pressure transducer (50', 50") adapted to detect the pressure downstream of said brake assembly (48', 48", 50', 50", 62', 62"), and in that the electronic control unit (42) is programmed for driving said brake assembly (48', 48", 50', 50", 62', 62") as a function of signals coming from the first (40) and the second(50', 50") pressure transducers.

3. A train according to claim 2, characterized in that said brake valve assembly comprises at least one electrically controlled brake valve (48', 48") and at least one electrically controlled brake-release valve (62', 62"), controlled by the electronic control unit (42) on the basis of signals coming from said pressure transducer (40, 50', 52").

4. A train according to claim 1, characterized in that said distributor (18) comprises an electrically controlled accelerating valve (44) intended to put the brake pipe (12) in communication with the atmosphere for a predetermined period of time when said pressure transducer (40) detects a drop of pressure in the brake pipe with respect to the reference pressure.

5. A train according to claim 1, characterized in that it comprises a weighing device (68', 68") adapted to detect the load acting on a respective bogie (1, 2) and to drive a valve (70', 70") adapted to reduce the braking pressure proportionally to the reduction of the load acting on the bogie with respect to a maximum load.

## Patentansprüche

1. Zug, gebildet aus mehreren, miteinander gekoppelten Wagen (M, V₁, V₂, V₃, ..., Vₙ), die ein Bremssystem umfassen, welches umfasst:
- mindestens einen Hauptbehälter für Druckluft (14), befindlich auf einer Lokomotive (M) des Zuges,
- eine Bremsleitung (12), die sich längs aller Wagen des Zuges erstreckt,
- einen Bremskontrollhahn (16), geeignet, um eine Druckreduzierung in der Bremsleitung (12) unter Berücksichtigung eines Referenzdrucks herzustellen,
- mehrere Bremszylinder (22', 22"), angeordnet auf den schienengebundenen Wagen,
- mindestens ein Reservebehälter (20) auf jedem Wagen des Zuges und
- mindestens einen Verteiler zur Steuerung der Bremsen (18), angeordnet auf jedem Wagen und verbunden mit der Bremsleitung (12), dem Hilfsbehälter (20) und mit mindestens einem Bremszylinder (22', 22"), wobei der Verteiler (18) geeignet ist, um mindestens einem jeweiligen Bremszylinder (22', 22") einen Bremsdruck zu übertragen, welcher in Beziehung zum Unterschied zwischen dem Druck in der Bremsleitung und dem genannten Referenzdruck steht,
wobei der Verteiler (18) eine elektronisch gesteuerte, elektro-pneumatische Einrichtung umfasst, die mindestens einen Druckwandler (40) zur Erzeugung eines elektrischen Signals, das den Druck in der Bremsleitung (12) anzeigt, mindestens einen elektronisch gesteuerten Aufbau von Bremsventilen (48', 48", 50', 50", 62', 62") und eine elektronische Steuerungseinheit (42), geeignet zur Steuerung des genannten Aufbaus von Bremsventilen (48', 48", 50', 50", 62', 62") in Abhängigkeit des von dem genannten Druckwandler (40) stammenden Signals, einschließt,
dadurch gekennzeichnet, dass der Verteiler (18) mindestens ein pneumatisch gesteuertes Sicherheitsventil (64) umfasst, welches geeignet ist, den Hilfsbehälter (20) in Verbindung mit mindestens einem Bremszylinder (22', 22") zu setzen, wenn der Druck der Bremsleitung (12) unter einen Schwellenwert für einen Sicherheitseingriff fällt.

2. Zug gemäß Anspruch 1, dadurch gekennzeichnet, dass der genannte Aufbau von Ventilen mindestens einen zweiten Druckwandler (50', 50") umfasst, geeignet, um den Druck hinter dem genannten Aufbau von Bremsen (48', 48", 50', 50", 62', 62") zu ermitteln, und dass die elektronische Steuerungseinheit (42) zum Betreiben des genannten Aufbaus von Bremsen (48', 48", 50', 50", 62', 62") in Abhängigkeit der von dem ersten (40) und dem zweiten (50', 50") Druckwandler stammenden Signale programmiert ist.

3. Zug gemäß Anspruch 2, dadurch gekennzeichnet, dass der genannte Aufbau von Bremsventilen mindestens ein elektronisch gesteuertes Bremsventil (48',48") und mindestens ein elektronisch gesteuertes Ventil zum Lösen der Bremse (62', 62") umfasst, das von der elektronisch Steuereinheit (42) gesteuert wird, auf der Grundlage der Signale, die von dem Druckwandler (40, 50', 52") stammen.

4. Zug gemäß Anspruch 1, dadurch gekennzeichnet, dass der genannte Verteiler (18) ein elektronisch gesteuertes Beschleunigungsventil (44) umfasst, das dazu bestimmt ist, die Bremsleitung (12) für einen vorbestimmten Zeitabschnitt in Verbindung mit der Atmosphäre zu setzen, wenn der genannte Druckwandler (40) einen Druckabfall in der Bremsleitung in Bezug auf den Referenzdruck erfasst.

5. Zug gemäß Anspruch 1, dadurch gekennzeichnet, dass er eine Wägevorrichtung (68', 68") umfasst, geeignet, um eine auf ein jeweiliges Fahrgestell (1, 2) wirkende Last zu ermitteln und ein Ventil (70', 70") anzutreiben, das geeignet ist, den Bremsdruck im Verhältnis zu der Verringerung der Last , die auf das Fahrgestell wirkt, in Bezug auf eine maximale Last zu reduzieren.

## Revendications

1. Train formé par une pluralité de véhicules (M, V₁, V₂, V₃, ..., Vₙ) couplés les uns aux autres, comportant un système de freinage comprenant :
- au moins un réservoir principal (14) d'air comprimé placé sur une locomotive (M) du train,
- un tuyau de freinage (12) qui s'étend le long de tous les véhicules du train,
un robinet (16) de commande de freinage apte à produire une réduction de pression dans le tuyau de freinage (12) par rapport à une pression de référence,
- une pluralité de tambours de freinage (22', 22'') agencés sur les véhicules roulant sur rails,
- au moins un réservoir auxiliaire (20 sur chaque véhicule du train, et
- au moins un distributeur pour commander les freins (18), agencé sur chaque véhicule et relié au tuyau de freinage (12), au réservoir auxiliaire (20) et au moins à un tambour de freinage (22' , 22"), le distributeur (18) étant apte à envoyer à au moins un tambour de freinage respectif (22', 22") une pression de freinage en corrélation avec la différence entre la pression dans le tuyau de freinage (12) et ladite pression de référence,
ledit distributeur (18) comprenant un dispositif électro-pneumatique commandé de manière électronique, incluant au moins un transducteur (40) de pression pour générer un signal électrique indicateur de la pression dans le tuyau de freinage (12), au moins un assemblage (48', 48", 50', 50", 62', 62") de vannes de freinage commandé de manière électrique et une unité (42) de commande électronique apte à commander ledit assemblage (48', 48", 50', 50", 62', 62") de vannes de freinage en fonction des signaux en provenance dudit transducteur (40) de pression,
caractérisé en ce que ledit distributeur (18) comprend une vanne de sécurité (64) commandée de manière pneumatique, apte à mettre le réservoir auxiliaire (20) en communication avec au moins un tambour de freinage (22', 22") lorsque la pression dans le tuyau de freinage (12) tombe au-dessous d'un seuil d'intervention de sécurité.

2. Train selon la revendication 1, caractérisé en ce que ledit assemblage de vannes comprend au moins un deuxième transducteur (50', 50") de pression apte à détecter la pression en aval dudit assemblage (48' , 48", 50', 50", 62', 62") de freinage, et en ce que l'unité (42) de commande électronique est programmée pour actionner ledit assemblage de freinage (48' , 48'', 50', 50", 62', 62") en fonction de signaux en provenance du premier (40) et du deuxième (50', 50") transducteurs de pression.

3. Train selon la revendication 2, caractérisé en ce que ledit assemblage de vannes de freinage comprend au moins une vanne (48', 48") de freinage commandée de manière électrique et au moins une vanne (62', 62") de libération de freinage commandée de manière électrique, commandées par l'unité (42) de commande électronique sur la base de signaux en provenance dudit transducteur (40, 50', 52") de pression.

4. Train selon la revendication 1, caractérisé en ce que ledit distributeur (18) comprend une vanne (44) d'accélération commandée de manière électrique destinée à mettre le tuyau de freinage (12) en communication avec l'atmosphère pendant un laps de temps prédéterminé lorsque ledit transducteur (40) de pression détecte une chute de pression dans le tuyau de freinage par rapport à la pression de référence.

5. Train selon la revendication 1, caractérisé en ce qu'il comprend un dispositif de pesage (68', 68") apte à détecter la charge agissant sur un bogie respectif (1, 2) et pour actionner une vanne (70', 70") apte à réduire la pression de freinage proportionnellement à la réduction de la charge agissant sur le bogie par rapport à une charge maximum.
